(19) Europäisches Patentamt
European Patent Office
Office européen des brevets

(11) Publication number: **0 499 793 B1**

(12) # EUROPEAN PATENT SPECIFICATION

(45) Date of publication of patent specification: **12.04.95**

(51) Int. Cl.[6]: **C10M 171/00**, C10M 105/48, C10M 107/34, C10M 105/32, C10M 111/04, C10M 169/04, C09K 5/04

(21) Application number: **92100772.0**

(22) Date of filing: **17.01.92**

The file contains technical information submitted after the application was filed and not included in this specification

(54) **Synthetic lubricating oils.**

(30) Priority: **18.01.91 JP 18359/91**
**18.01.91 JP 18360/91**
**28.01.91 JP 25178/91**
**08.01.92 JP 18427/92**
**08.01.92 JP 18428/92**

(43) Date of publication of application:
**26.08.92 Bulletin 92/35**

(45) Publication of the grant of the patent:
**12.04.95 Bulletin 95/15**

(84) Designated Contracting States:
**DE FR IT SE**

(56) References cited:
**EP-A- 0 384 724**
**EP-A- 0 426 153**
**EP-A- 0 460 614**
**FR-A- 2 154 524**
**US-A- 4 634 743**
**EP-A- 0 421 298**
**EP-A- 0 452 816**
**DE-A- 1 962 491**
**FR-A- 2 622 573**

(73) Proprietor: **NIPPON OIL CO., LTD.**
**3-12, Nishishimbashi 1-chome**
**Minato-ku**
**Tokyo (JP)**

(72) Inventor: **Ishida, Noboru, c/o Nippon Oil Co., Ltd.**
**Central Technical Research Lab.,**
**8 Chidori-cho**
**Naka-ku,**
**Yokohama-shi,**
**Kanagawa (JP)**
Inventor: **Sakamoto, Tetsuro, c/o Nippon Oil Co., Ltd.**
**Central Technical Research Lab.,**
**8 Chidori-cho**
**Naka-ku,**
**Yokohama-shi,**
**Kanagawa (JP)**
Inventor: **Hasegawa, Hiroshi, c/o Nippon Oil Co., Ltd.**
**Central Technical Research Lab.,**
**8 Chidori-cho**
**Naka-ku,**
**Yokohama-shi,**
**Kanagawa (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 499 793 B1

(74) Representative: **WILHELMS, KILIAN & PARTNER Patentanwälte**
**Eduard-Schmid-Strasse 2**
**D-81541 München (DE)**

## Description

Background of the Invention

1. Field of the Invention

This invention relates to the use of a synthetic lubricating oil which comprises a specific carbonic acid ester as a major component (a base oil) and an epoxy compound as a lubricating oil for refrigerators and the like (the oil being hereinafter referred to as "a refrigerator oil"), wherein a hydrogen-containing halogenocarbon and/or a hydrogen-free halogenocarbon is used as the refrigerant.

2. Prior Art

Generally, naphthenic mineral oils, paraffinic mineral oils, alkylbenzenes, polyglycolic oils and mixtures thereof, which have each a kinematic viscosity of 10-200 cSt at 40 °C, as well as said oils incorporated with suitable additives, have been used as refrigerator oils.

On the other hand, chlorofluorocarbon type refrigerants (CFCS), such as CFC-11, CFC-12, CFC-115 and HCFC-22, have been used as such for refrigerators.

Of these CFCS, those such as CFC-11, CFC-12 and CFC- 115, which are obtained by substituting all the hydrogen atoms of their hydrocarbons by halogen atoms including chlorine atoms, may lead to the destruction of the ozone layer, and, therefore, the use of the CFCS has been restricted. Accordingly, hydrogen-containing halogenocarbons, particularly chlorine-free type halogenocarbons such as HFC-32, HFC-134a and HFC-152a, have been being used as substitutes for CFCS. HFC-134a is especially hopeful as a substitute refrigerant since it is similar in thermodynamic properties to CFC-12 which has heretofore been used in many kinds of refrigerators for home cold-storage chests, air-conditioners, car air-conditioners and the like.

Refrigerator oils require various properties, among which their miscibility with refrigerants is extremely important in regard to lubricity and system efficiency in refrigerators. However, conventional refrigerator oils comprising, as the base oils, naphthenic oils, paraffinic oils, alkylbenzenes and the like, are hardly miscible with chlorine-free type halogenocarbons such as HFC-32, HFC-134a. Therefore, if said conventional refrigerator oils are used in combination with HFC-134a, the resulting mixture will separate into two layers at normal temperature thereby to degrade the oil-returnability which is the most important within the refrigeration system and cause various troubles such as a decrease in refrigeration efficiency, the deterioration of lubricity and the consequent seizure of the compressor within the system whereby the refrigerator oils are made unsuitable for use as such.

In attempts to solve such problems, the present inventors developed polyglycolic refrigerator oils which have excellent miscibility with HFC-134a as compared with conventional known refrigerator oils, filed an application for a patent for the thus developed polyglycolic refrigerator oils and have already obtained a patent (U.S.P. No. 4,948,525) therefor. Further, U.S. Patent No. 4,755,316 discloses polyglycolic refrigerator oils which are compatible with HFC-134a.

EP-A-0 384 724 (Nippon Oil) discloses lubricating oil compositions comprising a base oil and a halogen containing ester of phosphoric acid in an amount in the range of from 0.01 to 5 parts by weight relative to 100 parts by weight of the base oil, and lubricating oil compositions further comprising an epoxy compound in an amount in the range of from 0.1 to 5 parts by weight relative to 100 parts by weight of the base oil.

The present inventors found that esters having specific structures have excellent miscibility with chlorine-free type halogenocarbons such as HFC-134a and a high electrical insulating property, and filed applications for patents for the esters (Japanese Patent Application Laid-Open Gazettes Nos. Hei. 3-200895 and Hei. 3-200896, and Japanese Patent Applications Nos. Hei. 2-105772 and Hei. 2-121133. Hei. 1 and Hei. 2 are the same as 1989 and 1990 A.D., respectively.).

The known esters have various excellent properties as mentioned above, but they are hydrolyzable and therefore they are not necessarily suitable for use in apparatuses, such as cold-storage chests and car air-conditioners, which must be operated for a long period of time with high reliability. Accordingly, it has been desired to develop a refrigerator oil which has high miscibility with hydrogen-containing halogenocarbons such as HFC-32, HFC-134a, HFC-152a, and also has a high hydrolysis stability (or high stability to hydrolysis).

## Summary of the Invention

The present inventors made various intensive studies in attempts to develop lubricating oils which can meet the aforesaid requirements and, as the result of their studies, they found that carbonic acid esters having specific structures have excellent miscibility with hydrogen-containing halogenocarbons such as HFC-134a and HFC-152a, and a high electrical insulating property as well as excellent lubricity and excellent hydrolytic stability.

The object of this invention is the use of synthetic lubricating oils which comprise as a major component (or a base oil) at least one kind of carbonic acid ester having a specific structure and an epoxy compound, as lubricating oil in refrigerators using therein a hydrogen-containing halogenocarbon and/or a hydrogen-free halogenocarbon as the refrigerant as disclosed in independent claim 1 and dependent claims 2 to 6. The cited lubricating oils have excellent miscibility with hydrogen-containing halogenocarbons such as HFC-134a, as well as excellent hydrolysis stability.

The synthetic lubricating oil of the present invention is characterized in that it comprises as a base oil [A] at least one kind of a carbonic acid ester selected from the group consisting of:

[I] a carbonic acid ester represented by the general formula (1)

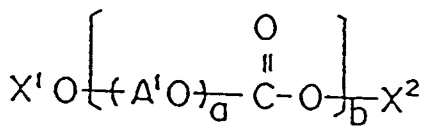

(1)

and,

[II] a carbonic acid ester represented by the general formula (2)

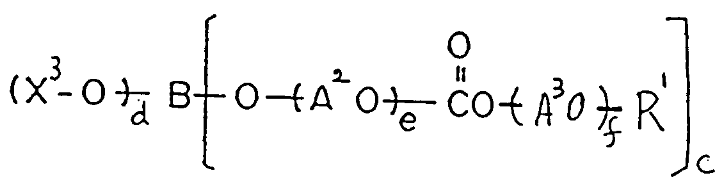

(2)

and [B] at least one kind of an epoxy compound disclosed in pages 18 and 19.

First, the carbonic esters [I] will be explained in detail as indicated below.

In the general formula (1), $X^1$ represents a member selected from the group consisting of a hydrogen atom, an alkyl group (preferably having 1-12 carbon atoms), a cycloalkyl group (preferably having 5-12 carbon atoms) or a group having a general formula of

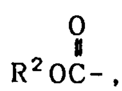 , $X^2$

$X^2$ represents a member selected from the group consisting of an alkyl group, a cycloalkyl group (preferably having 5-12 carbon atoms) or a group having a general formula of

$$-(A^4O)_g-R^3 ,$$

$A^1$ and $A^4$ may be identical with, or different from, each other and are each an alkylene group having 2-4 carbon atoms (with the proviso that the alkylene groups necessarily include an ethylene group or etylene groups), $R^2$ represents an alkyl group (preferably having 1-12 carbon atoms) or cycloalkyl group (preferably having 5-12 carbon atoms), $R_3$ represents a hydrogen atom, an alkyl group (preferably having 1-12 carbon atoms) or a cycloalkyl group (preferably having 5-12 carbon atoms), a and g are each an integer of 1-50

and b is an integer of 1-10.

The alkyl groups represented by each of $X^1$, $X^2$, $R^2$ and $R^3$ are exemplified by methyl group, ethyl group, n-propyl group, n-butyl group, n-pentyl group, n-hexyl group, n-heptyl group, n-octyl group, n-nonyl group, n-decyl group, n-undecyl group, n-dodecyl group, iso-propyl group, iso-butyl group, tert.-butyl group, iso-pentyl group, iso-hexyl group, iso-heptyl group, iso-octyl group, iso-nonyl group, iso-decyl group, iso-undecyl group and iso-dodecyl group. Further, the cycloalkyl groups are exemplified by cyclopentyl group, cyclooctyl group, cyclononyl group, cyclodecyl group, cycloundecyl group, cyclohexyl group, cycloheptyl group, cyclododecyl group, methylcyclohexyl group, ethylcyclohexyl group, propylcyclohexyl group, butylcyclohexyl group, pentylcyclohexyl group and hexylcyclohexyl group.

The alkylene groups having 2 - 4 carbon atoms represented respectively by $A^1$ and $A^2$ are exemplified by ethylene group, propylene group, trimethylene group, butylene group, tetramethylene group, 1-methyl trimethylene group, 2-methyl trimethylene group, 1,1-dimethylethylene group, 1,2-dimethylethylene group with the proviso that the carbonic acid ester of polyalkylene glycol of the present invention necessarily contains at least one ethylene group in the polyalkylene portion thereof. The carbonic acid ester of polyalkylene glycol containing ethylene groups therein is remarkably improved in solubility in the HFC-134a refrigerant carrier as compared with the conventional polyalkylene glycol and alkyl ethers thereof. The amount of ethylene group contained in the polyalkylene group is normally not larger than 60 % by weight, preferably 10 to 50 % by weight, based on the total amount of the alkylene groups. The type of polymerizing oxyethylene group with another oxyalkylene group is not particularly limited, and it may be either random copolymerization or block copolymerization.

A method for producing the carbonic acid esters to be used in the present invention is not particularly limited. For example, the carbonic acid esters can be produced by polymerizing an alkylene oxide to produce a polyalkylene glycol and reacting the thus obtained polyalkylene glycol with chloroformate having 2-13 carbon atoms in the presence of an alkali such as metallic sodium, an alkali metal hydroxide such as sodium hydroxide or potassium hydroxide, or an alkali metal alkoxyde such as sodium methoxide or sodium ethoxyde at a temperature of from 0 to 30 °C, or it can be produced by reacting a polyalkylene glycol with a diester carbonate or phosgen, which is a source for supply of carbonic acid, and an alcohol having 1-12 carbon atoms in the presence of an alkali such as metallic sodium, an alkali metal hydroxide such as sodium hydroxide or potassium hydroxide, an alkali metal alkoxyde such as sodium methoxyde or sodium ethoxyde at a temperature of from 80 to 150 °C.

Secondly, the carbonic esters [II] will be explained in detail as indicated below.

In the general formula (2), $X^3$ represents a member selected from the group consisting of a hydrogen atom, an alkyl group (preferably having 1-12 carbon atoms), a cycloalkyl group (preferably having 5-12 carbon atoms) or a group having the general formula of $R^4$-$(OA^5)_h$-; $A^2$, $A^3$ and $A^5$ may be identical with, or different from, each other and are each an alkylene group having 2-4 carbon atoms; $R^1$ and $R^4$ may be identical with, or different from, each other and are each a hydrogen atom, an alkyl group (preferably having 1-12 carbon atoms) or a cycloalkyl group (preferably having 5-12 carbon atoms); B represents the residue of a compound having 3-20 hydroxyl groups; c is an integer of 1-20, d is an integer of 0-19 and the sum of c and d equals 3-20; e and f are each an integer of 0-50 provided that e and f are not zero at the same time; and h is an integer of 1-50.

The alkylene groups having 2 - 4 carbon atoms,which are represented respectively by $A^1$, $A^2$, $A^3$ and $A^5$, are exemplified by ethylene group, propylene group, trimethylene group, butylene group, tetramethylene group, 1-methyltrimethylene group, 2-methyltrimethylene group, 1,1-dimethylethylene group and 1,2-dimethylethylene group.

The preferable alkyl groups represented respectively by $X^3$, $R^1$ and $R^4$ are exemplified by methyl group, ethyl group, n-propyl group, iso-propyl group, n-butyl group, iso-butyl group, sec.-butyl group, tert.-butyl group, n-pentyl group, iso-pentyl group, neopentyl group, n-hexyl group, iso-hexyl group, n-heptyl group, iso-heptyl group, n-octyl group, iso-octyl group, n-nonyl group, iso-nonyl group, n-decyl group, iso-decyl group, n-undecyl group, iso-undecyl group, n-dodecyl group and iso-dodecyl group. The preferable cycloalkyl groups are exemplified by cyclopentyl group, cyclohexyl group, cycloheptyl group, cyclooctyl group, cyclononyl group, cyclodecyl group, cycloundecyl group, cyclododecyl group, methylcyclohexyl group, ethylcyclohexyl group, propylcyclohexyl group, butylcyclohexyl group, pentylcyclohexyl group and hexylcyclohexyl group.

The compounds having 3 - 20 hydroxyl groups of which residue is B (these compounds being hereinafter referred to as "polyol compounds") are exemplified by polyhydric alcohols such as glycerin, polyglycerin (dimer to octadecamer of glycerin such as diglycerin, triglycerin and tetraglycerin), trimethylolethane, trimethylolpropane, trimethylolbutane, monopentaerythritol, dipentaerythritol, tripentaerythritol, 1,3,5-pentanetriol, sorbitol, sorbitan, sorbitol glycerin condensate, adonitol, arabitol, xylitol and

mannitol; polyhydric phenols such as pyrogallol and phloroglucin; saccharides such as xylose, arabinose, ribose, rhamnose, glucose, fructose, galactose, mannose, sorbose, cellobiose, maltose, isomaltose, trehalose, sucrose, raffinose, gentianose and melezitose; and partially etherified compounds, partially esterified compounds and methyl glucoside (glycoside) derived from said saccharides. In this case, B may have free hydroxyl groups therein. This means that all of the hydroxyl groups in the polyol compounds may not be esterified.

In the polyoxyalkylene portion of the carbonic acid ester according to the present invention, alkylene groups having different carbon numbers and structures may be present in the molecule. In this case, the type of polymerizing the oxyethylene groups is not particularly limited, and it may be either random copolymerization or block copolymerization.

A method for producing the carbonic acid esters to be used in the present invention is not particularly limited. For example, the carbonic acid esters can be produced by addition reacting polyol compounds with alkylene oxides to produce polyalkylene glycol polyol ethers and reacting the thus obtained polyalkylene glycol polyol ethers with chloroformate having 2-13 carbon atoms in the presence of an alkali such as metallic sodium, an alkali metal hydroxide such as sodium hydroxide or potassium hydroxide, or an alkali metal alkoxyde such as sodium methoxyde and sodium ethoxyde potassium hydroxide at a temperature of from 0 to 30 °C, or it can be produced by reacting a polyalkylene glycol polyol ether with a diester carbonate or phosgen, which is a source for supply of carbonic acid, in the presence of an alkali such as metallic sodium, an alkali metal hydroxide such as sodium hydroxide or potassium hydroxide, an alkali metal alkoxyde such as sodium methoxyde or sodium ethoxyde potassium hydroxide at a temperature of from 80 to 150 °C. Then, free hydroxyl groups contained in the thus obtained carbonic acid esters may be etherified, as required.

The carbonic acid esters [I] - [II] obtained by the methods as mentioned above may be refined to remove the by-products and/or unreacted reactants, but the by-products and/or unreacted reactants may be present in small amounts in the lubricating oils of the present invention as far as they do not impair the excellent performances thereof.

In the preparation of the synthetic lubricating oils of the present invention, the carbonic acid esters [I] - [II] mentioned above may be used singly, or jointly as a mixture of at least two kinds of the esters.

The molecular weight of each of the carbonic acid esters [I] - [II] according to the present invention is not particularly limited, but, in a case where the carbonic acid ester is used as a refrigerator oil, the number average molecular weight of the carbonic acid ester is in the range of preferably 200-4000, more preferably 300-3000, to improve the compressor in sealability.

The kinematic viscosities of the carbonic acid esters [I] - [II] according to the present invention are in the range of preferably 2-150 cSt, more preferably 4-100 cSt at 100 °C.

The lubricating oil of the present invention may comprise as the only base oil [A] at least one member selected from the above carbonic acid esters [I] - [II] and, as required, it may additionally comprise other base oils for lubricating oils. The other base oils will be illustrated hereinafter. For example, mineral oils usable as the other base oils are exemplified by paraffinic or naphthenic base oils which are produced by subjecting lubricating oil fractions obtained by atmospheric distillation or reduced pressure distillation of a crude oil, to a suitable combination of refining treatments such as solvent deasphalting, solvent extraction, hydrocracking, solvent dewaxing, catalytic dewaxing, hydrorefining, sulfuric acid treatment and clay treatment. Further, the synthetic oils usable as the other base oils are exemplified by poly alpha-olefins such as polybutene, 1-octene oligomers and 1-decene oligomers; alkylbenzenes; alkylnaphthalenes; diesters such as ditridecyl glutarate, di 2-ethylhexyl adipate, diisodecyl adipate, ditridecyl adipate and di 3-ethylhexyl sebacate; polyol esters such as trimethylolpropane caprylate, trimethylolpropane pelargonate, pentaerythritol 2-ethyl hexanoate and pentaerythritol pelargonate; polyalkylene glycols; polyphenyl ethers; silicone oils; perfluoro alkylethers; and mixtures of at least two kinds of the synthetic oils. In a case where the other base oils are to be incorporated in the carbonic acid esters [I] - [II], it is desirable that the carbonic acid esters [I] - [II] be present therein in a ratio of not less than 20% by weight, preferably not less than 50% by weight, more preferably not less than 70% by weight of the total amount of the other base oils and the carbonic acid esters.

The lubricating oil may comprise as the only base oil at least one member selected from the above carbonic acid esters [I] - [II] and, as required, it may additionally comprise other base oils for refrigerator oils.

Among the other base oils which are conventional ones, preferable ones are illustrated by polyglycols such as polyoxyalkylene glycols, polyoxyalkylene glycol monoethers, polyoxyalkylene glycol diethers and polyoxyalkylene glycol glycerol ethers; complex esters of a monohydric alcohol, a dihydric alcohol, a monocarboxylic acid and a dicarboxylic acid; esters of a neopentyl type polyol such as pentaerythritol,

trimethylolpropane or a dimer or trimer thereof and an carboxylic acid; complex esters of a neopentyl type polyol, a monocarboxylic acid and a dicarboxylic acid; and carbonic acid esters other than carbonic acid esters [I] - [II] according to the present invention.

These conventional base oils may be incorporated singly or jointly, and are desired to be incorporated in an amount of not more than 80% by weight, preferably not more than 70% by weight, more preferably not more than 50% by weight of the total amount of the lubricating oil according to the present invention.

Further, the carbonic acid esters [I] - [II] according to the present invention may be incorporated with other oils such as paraffinic mineral oils, naphthenic mineral oils, poly$\alpha$-olefins and alkylbenzenes, but, in this case, these other oils may desirably be incorporated in an amount of not more than 30% by weight, preferably not more than 20% by weight, of the total amount of the lubricating oils since these other oils are poor in miscibility with hydrogen-containing halogenocarbon refrigerants.

To further enhance the lubricating oil of the present invention in excellent performances, the lubricating oil may be incorporated, as required, with heretofore known additives for lubricating oils. The additives are exemplified by antioxidants such as phenol-type ones, amine-type ones, sulfur-type ones, zinc thiophosphate-type ones and phenothiazine-type ones; wear resistant additives such as molybdenum dithiophosphate, molybdenum dithiocarbamate, molybdenum disulfide, carbon fluorides, boric esters, aliphatic amines, higher alcohols, higher fatty acids, fatty acid esters and fatty acid amides; extreme pressure agents such as tricresyl phosphate, triphenyl phosphate and zinc dithiophosphate; corrosion inhibitors such as petroleum sulfonates, alkylbenzene sulfonates and dinonylnaphthalene sulfonates; metal inactivators such as benzotriazole; metallic detergents such as alkaline earth metal sulfonates, alkaline earth metal phenates, alkaline earth metal salicylates and alkaline earth metal phosphonate; ash-free dispersants such as succinimide, succinate esters and benzylamine; antifoaming agents such as silicone; viscosity index improvers such as polymethacrylate, polyisobutylene and polystyrene; and pour point depressants. These additives may be used singly or jointly. The contents of the viscosity index improver, the antifoaming agent, the metal inactivator and each of the other additives are ordinarily 1 - 30% by weight, 0.0005 - 1% by weight, 0.005 - 1% by weight and 0.1 - 15% by weight of the total amount of the lubricating oil, respectively.

The lubricating oil may be incorporated further with at least one kind of a phosphorus compound selected from the group consisting of phosphoric esters, acid phosphoric esters, amine salts of acid phosphoric esters, chlorinated phosphoric esters and phosphorous esters, to improve the oil in wear resistance and load resistance. These phosphorus compounds are esters of phosphoric acid or phosphorous acid and an alkanol or a polyether type alcohol, or derivatives of the esters. The phosphoric esters are exemplified by tributyl phosphate, triphenyl phosphate and tricresyl phosphate. The acid phosphoric esters are exemplified by ditetradecyl acid phosphate, dipentadecyl acid phosphate, dihexadecyl acid phosphate, diheptadecyl acid phosphate and dioctadecyl acid phosphate. The amine salts of acid phosphoric esters are exemplified by salts of the above acid phosphoric esters and amines such as methylamine, ethylamine, propylamine, butylamine, pentylamine, hexylamine, heptylamine, octylamine, dimetylamine, diethylamine, dipropylamine, dibutylamine, dipentylamine, dihexylamine, diheptylamine, dioctylamine, trimetylamine, trietylamine, tripropylamine, tributylamine, tripentylamine, trihexylamine, triheptylamine and trioctylamine. The chlorinated phosphoric esters are exemplified by tris•dichloropropyl phosphate, tris•chloroethyl phosphate, polyoxyalkylene•bis[di(chloroalkyl)] phosphate and tris•chlorophenyl phosphate. The phosphorous esters are exemplified by dibutyl phosphite, tributyl phosphite, dipentyl phosphite, tripentyl phosphite, dihexyl phosphite, trihexyl phosphite, diheptyl phosphite, triheptyl phosphite, dioctyl phosphite, trioctyl phosphite, dinonyl phosphite, didecyl phosphite, diundecyl phosphite, triundecyl phosphite, didodecyl phosphite, tridodecyl phosphite, diphenyl phosphite, triphenyl phosphite, dicresyl phosphite, tricresyl phosphite and mixtures thereof. These phosphorous compounds may be added to the lubricating oil in a ratio of 0.1-5.0 % by weight, preferably 0.2-2.0 % by weight, of the total amount of the lubricating oil.

The component [B] ist at least one kind of an epoxy compound selected from the group consisting of phenylglycidyl ether type epoxy compounds, glycidyl ester type epoxy compounds, epoxidized fatty acid monoesters and epoxidized vegetable oils. The said phenylglycidyl ether type epoxy compounds used herein include phenylglycidyl ether and alkylphenylglycidyl ethers. The said alkylphenylglycidyl ethers are those having 1 to 3 alkyl groups having 1 to 13 carbon atoms, among which are preferred those having an alkyl group having 4 to 10 carbon atoms, such as butylphenylglycidyl ether, pentylphenylglycidyl ether, hexylphenylglycidyl ether, heptylphenylglycidyl ether, octylphenylglycidyl ether, nonylphenylglycidyl ether and decylphenylglycidyl ether. The said glycidyl ester type epoxy compounds include phenylglycidyl esters, alkylglycidyl esters and alkenylglycidyl esters, with glycidyl benzoate, glycidyl acrylate, glycidyl methacrylate and the like being preferred.

The epoxidized fatty acid monoesters include esters of an epoxidized fatty acid having 12 to 20 carbon atoms and an alcohol having 1 to 8 carbon atoms, phenol or an alkylphenol. In particular, butyl, hexyl, benzyl, cyclohexyl, methoxyethyl, octyl, phenyl or butylphenyl esters of epoxidized stearic acid may preferably be used.

The epoxidized vegetable oils include epoxidized compounds of vegetable oils such as soybean oil, linseed oil and cottonseed oil.

Among these epoxy compounds, the preferable ones include phenylglycidyl ether type epoxy compounds and epoxidized fatty acid monoesters with the former being more preferable. The most preferred are phenylglycidyl ether, butylphenylglycidyl ether and mixtures thereof.

In a case where these epoxy compounds are to be incorporated in the lubricating oil of the present invention, it is desirable that they be incorporated therein in a ratio of 0.1-5.0 % by weight, preferably 0.2-2.0 % by weight, of the total amount of the lubricating oil.

Furthermore, to further improve the lubricating oil in wear resistance and load resistance, it may be incorporated with a carboxylic acid represented by the general formula (3)

$R^5 - CH(COOH)_2$ (3)

and/or the general formula (4)

$R^6 - CH_2 - COOH$ (4)

wherein $R^5$ and $R^6$ may be identical with, or different from, each other and are each an alkyl group having 8 - 18 carbon atoms. The above carboxylic acids are exemplified by octylmalonic acid, nonylmalonic acid, decylmalonic acid, undecylmalonic acid, dodecylmalonic acid, tridecylmalonic acid, tetradecylmalonic acid, pentadecylmalonic acid, hexadecylmalonic acid, heptadecylmalonic acid, octadecylmalonic acid, decanoic acid, undecanoic acid, lauric acid, tridecanoic acid, myristic acid, pentadecanoic acid, palmitic acid, heptadecanoic acid, stearic acid, nonadecanoic acid, eicosanoic acid and mixtures of at least two kinds of the above carboxylic acids. In a case where these carboxylic acids are to be incorporated in the lubricating oil of the present invention, it is desirable that they be incorporated therein in a ratio of 0.01 - 3% by weight, preferably 0.05 - 2% by weight, of the total amount of the lubricating oil.

To further enhance the lubricating oil of the present invention in wear-lowering performance, the lubricating oil may be incorporated with monohydric alcohols having 7-18 carbon atoms, dihydric alcohols having 7-18 carbon atoms and/or partial esters of polyhydric alcohols having 7-18 carbon atoms.

The monohydric alcohols having 7-18 carbon atoms are exemplified by octyl, nonyl, decyl, undecyl, dodecyl, tridecyl, tetradecyl, pentadecyl, hexadecyl, heptadecyl, octadecyl, oleyl and linoleyl alcohols, and mixtures of at least two alcohols mentioned above. The dihydric alcohols having 7-18 carbon atoms are exemplified by polymethylene diol. The partial esters of polyhydric alcohols having 7-18 carbon atoms are exemplified by partial esters of a polyglycerin and a fatty acid.

In a case where these compounds are to be incorporated in the lubricating oil of the present invention, it is desirable that they be incorporated therein in a ratio of 0.01 - 3.0% by weight, preferably 0.05-2.0% by weight, of the total amount of the lubricating oil.

Of course, at least two kinds of the aforementioned phosphorus compounds, epoxy compound, carboxylic acids, alcohols and partial esters of polyhydric alcohols having 7-18 carbon atoms may be used jointly.

To further enhance the lubricating oil in performances, the lubricating oil may be incorporated, as required, with heretofore known additives for a refrigerator oil, which include phenol-type antioxidants such as di-tert.-butyl-p-cresol and bisphenol A; amine-type antioxidants such as phenyl-$\alpha$-naphthylamine and N,N-di(2-naphthyl)-p-phenylenediamine; wear resistant additives such as zinc dithiophosphate; extreme pressure agents such as chlorinated paraffin and sulfur compounds; oiliness improvers such as fatty acids; antifoaming agents such as silicone-type ones; and metal inactivators such as benzotriazole. These additives may be used singly or jointly. The total amount of these additives added is ordinarily not more than 10% by weight, preferably not more than 5% by weight, of the total amount of the lubricating oil.

In a case where conventional refrigerator oils and/or additives are to be incorporated in the carbonic acid esters [I] - [II] of the present invention, it is desirable that the carbonic acid esters [I] - [II] be incorporated in the resulting lubricating oil in a ratio of not less than 5% by weight, preferably not less than 10% by weight, more preferably not less than 50% by weight, most preferably not less than 70% by weight, of the total amount of the lubricating oil.

In a case where the lubricating oil of the present invention comprising at least one kind of the carbonic acid esters [I] - [II] as a major component is to be used as a refrigerator oil, the lubricating oil should have such viscosity and pour point as those which are normally suitable for an ordinary refrigerator oil, but it should desirably have a pour point of not higher than -10 °C, preferably -20 °C to -80 °C, to prevent it from solidification at a low temperature. Further, the viscosity of the lubricating oil of the present invention may suitably be selected depending on the use thereof, but the lubricating oil should desirably have a kinematic viscosity of not less than 2cSt, preferably not less than 3cSt at 100 °C, to keep the sealability of the compressor of the refrigerator when used, while it should desirably have a kinematic viscosity of not more than 150cSt, preferably not more than 100cSt at 100 °C, in view of its fluidity at a low temperature and the efficiency of heat exchange in the evaporator when used.

The refrigerants which may be used in refrigerators in which the lubricating oils of the present invention are suitably used as refrigerator oils, include hydrogen-containing halogenocarbons such as pentafluoroethane (HFC-125), 1,1,2,2-tetrafluoroethane (HFC-134), 1,1,1,2-tetrafluoroethane (HFC-134a), 1,1-difluoroethane (HFC-152a), difluoromethane (HFC-32), trifluoromethane (HFC-23), monochlorodifluoromethane (HCFC-22) or 1-chloro-1, 1-difluoroethane (HCFC-142b), dichlorotrifluoroethane (HCFC-123), monochlorotetrafluoroethane (HCFC-124); hydrogen-free halogenocarbons such as trichloromonofluoromethane (CFC-11), dichlorodifluoromethane (CFC-12), monochlorotrifluoromethane (CHC-13) and monochloropentafluoromethane (CFC-115); and mixtures of at least two of the halogenocarbons. Among these halogenocarbons, the hydrogen-containing halogenocarbons are preferable with chlorine-free type halogenocarbons such as HFC-32, HFC-23, HFC-125, HFC-134, HFC-134a and HFC-152a being particularly preferable in view of the environmental problems. The most preferred is HFC-134a.

The lubricating oils of the present invention are very excellent in miscibility with the hydrogen-containing halogenocarbons, particularly chlorine-free type halogenocarbons, as compared with the heretofore known lubricating oils.

The lubricating oils of the present invention may particularly preferably be used as refrigerator oils in air-conditioners, dehumidifiers, cold-storage chests, freezers, freeze and refrigeration warehouses, automatic vending machines, showcases, cooling units in chemical plants, and the like which have a reciprocating or rotary compressor. Further, the above lubricating oils may also preferably be used in refrigerators having a centrifugal compressor. Further, the lubricating oils of the present invention may be used as not only the refrigerator oils, but also engine oils, gear oils, hydraulic oils, metal processing oils and the other industrial lubricating oils.

The present invention will be better understood by the following Examples and Comparative Examples, but the present invention is not limited to the embodiments described in the Examples.

Examples 1-25 and Comparative Examples 1-6

Lubricating oils of the present invention and comparative lubricating oils of conventional types are illustrated as follows:

[Example 1] A refrigerator oil of the present invention comprising a corbonic acid ester having an average molecular weight of 2000 represented by the following formula:

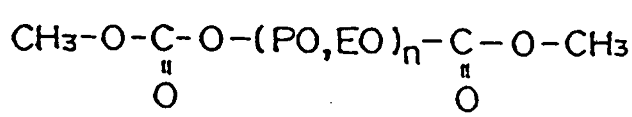

wherein $(PO, EO)_n$ is a random copolymer of oxypropylene groups and oxyethylene groups with the proviso that the weight ratio of the oxypropylene groups : the oxyethylene groups is 50 : 50.

[Example 2] A refrigerator oil comprising a carbonic acid ester having an average molecular weight of 2000 represented by the following formula:

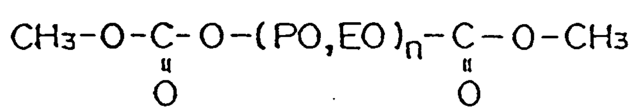

wherein (PO, EO)$_n$ is a random copolymer of oxypropylene groups and oxyethylene groups with the proviso that the weight ratio of the oxypropylene groups : the oxyethylene groups is 90 : 10.

[Example 3] A refrigerator oil comprising a carbonic acid ester having an average molecular weight of 2000 represented by the following formula:

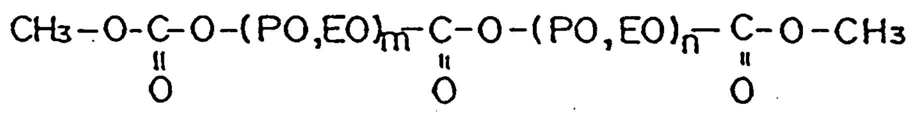

wherein (PO, EO)$_m$ and (PO, EO)$_n$ are each a random copolymer of oxypropylene groups and oxyethylene groups with the proviso that the weight ratio of the oxypropylene groups : the oxyethylene groups is 50 : 50.

[Example 4] A refrigerator oil comprising a carbonic acid ester having an average molecular weight of 1000 represented by the following formula:

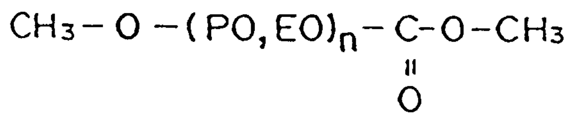

wherein (PO, EO)$_n$ is a random copolymer of oxypropylene groups and oxyethylene groups with the proviso that the weight ratio of the oxypropylene groups : the oxyethylene groups is 90 : 10.

[Example 5] A refrigerator oil comprising a carbonic acid ester having an average molecular weight of 1000 represented by the following formula:

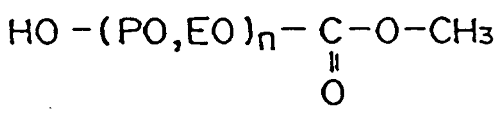

wherein (PO, EO)$_n$ is a random copolymer of oxypropylene groups and oxyethylene groups with the proviso that the weight ratio of the oxypropylene groups : the oxyethylene groups is 90 : 10.

[Example 6] A refrigerator oil comprising a carbonic acid ester having an average molecular weight of 1800 represented by the following formula:

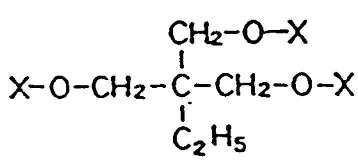

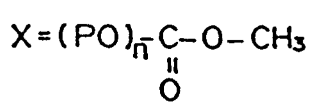

wherein (PO)$_n$ is a polyoxypropylene group.

[Example 7] A refrigerator oil comprising a carbonic acid ester having an average molecular weight of 1600 represented by the following formula:

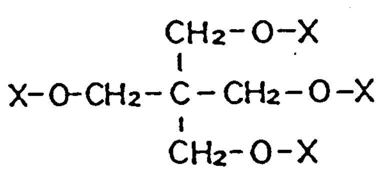

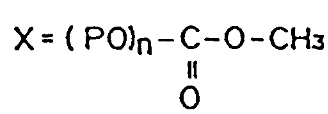

wherein (PO)$_n$ is a polyoxypropylene group.

[Example 8] A refrigerator oil comprising a carbonic acid ester having an average molecular weight of 2000

represented by the following formula:

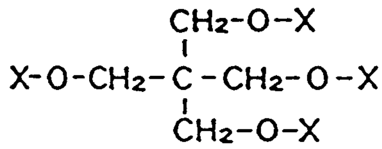

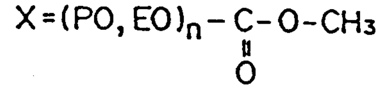

wherein $(PO, EO)_n$ is a random copolymer of oxypropylene groups and oxyethylene groups with the proviso that the weight ratio of the oxypropylene groups : the oxyethylene groups is 50 : 50.

[Example 9] A refrigerator oil comprising a carbonic acid ester having an average molecular weight of 2500 represented by the following formula:

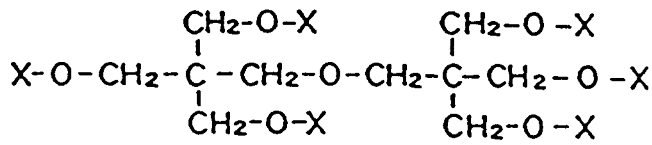

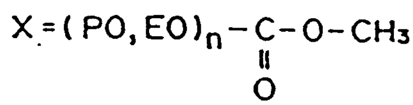

wherein $(PO, EO)_n$ is a random copolymer of oxypropylene groups and oxyethylene groups with the proviso that the weight ratio of the oxypropylene groups : the oxyethylene groups is 50 : 50.

[Example 10] A refrigerator oil comprising a carbonic acid ester having an average molecular weight of 1000 represented by the following formula:

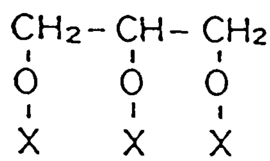

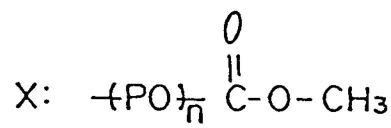

wherein $(PO)_n$ is a polyoxypropylene group.

[Example 11] A refrigerator oil comprising a carbonic acid ester having an average molecular weight of 2000 represented by the following formula:

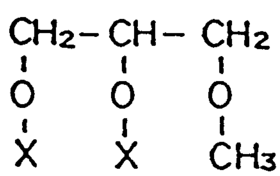

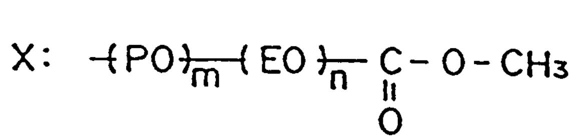

wherein $(PO)_m$-$(EO)_n$ is a random copolymer of polyoxypropylene groups and poly oxyethylene groups with the proviso that the weight ratio of the polyoxypropylene groups : the poly oxyethylene groups is 90 : 10.

[Example 12] A refrigerator oil comprising a carbonic acid ester having an average molecular weight of 2000 represented by the following formula:

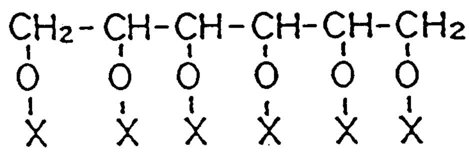

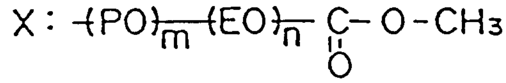

wherein $(PO)_m$-$(EO)_n$ is a random copolymer of polyoxypropylene groups and poly oxyethylene groups with the proviso that the weight ratio of the polyoxypropylene groups : the poly oxyethylene groups is 90 : 10.

[Example 13] A refrigerator oil comprising a carbonic acid ester having an average molecular weight of 2000 represented by the following formula:

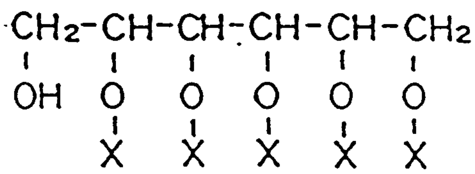

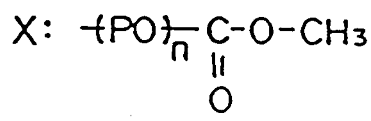

wherein $(PO)_n$ is a polyoxypropylene group.

[Example 14] A refrigerator oil comprising a carbonic acid ester having an average molecular weight of 1000 represented by the following formula:

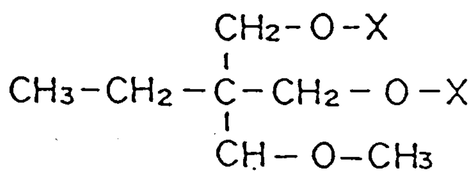

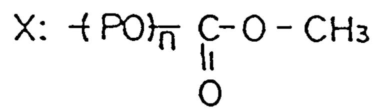

wherein $(PO)_n$ is a polyoxypropylene group.

[Example 15] A refrigerator oil comprising a carbonic acid ester having an average molecular weight of 2000 represented by the following formula:

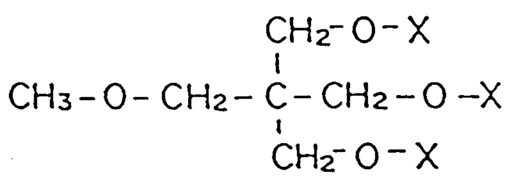

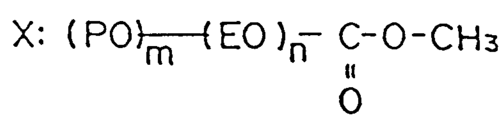

wherein $(PO)_m$-$(EO)_n$ is a random copolymer of polyoxypropylene groups and poly oxyethylene groups with the proviso that the weight ratio of the polyoxypropylene groups : the poly oxyethylene groups is 90 : 10.

[Example 16] A refrigerator oil comprising a carbonic acid ester having an average molecular weight of 2000 represented by the following formula:

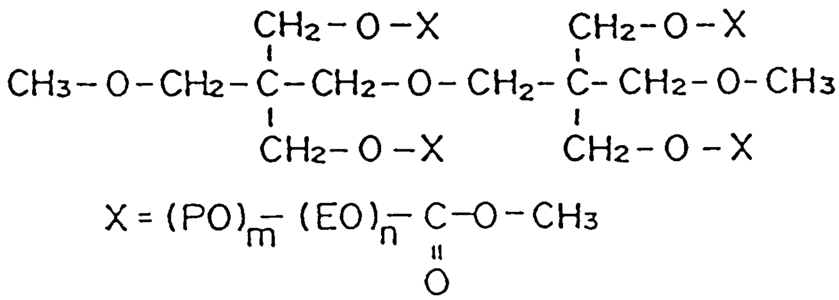

wherein $(PO)_m$-$(EO)_n$ is a random copolymer of polyoxypropylene groups and poly oxyethylene groups with the proviso that the weight ratio of the polyoxypropylene groups : the poly oxyethylene groups is 50 : 50.

[Example 17] A refrigerator oil comprising a carbonic acid ester of a polyglycerin alkylether having a number average molecular weight of 2100 represented by the following formula:

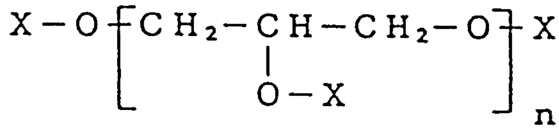

wherein each of X is $-CH_2-C(CH_3)H-O-CH_3$ or $-CH_2-C(CH_3)H-O-CO-O-CH_3$ with the proviso that the molar ratio of the former : the latter is 50 : 50, and n is a number average value of 11.3 .

[Example 18] A refrigerator oil comprising a carbonic acid ester having an average molecular weight of 1000 represented by the following formula:

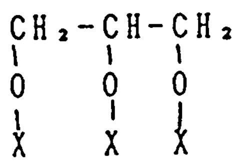

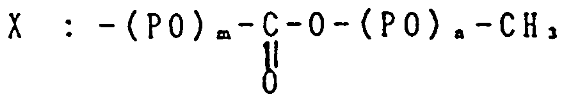

wherein $(PO)_m$ and $(PO)_n$ are each a polyoxypropylene group.

[Example 19] A refrigerator oil comprising a carbonic acid ester having an average molecular weight of 2000 represented by the following formula:

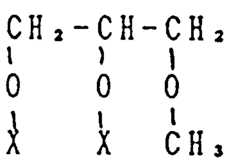

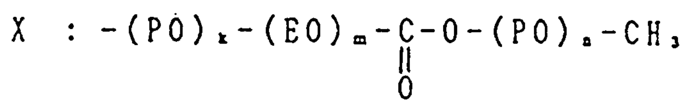

wherein $(PO)_k$-$(EO)_m$ is a random copolymer of polyoxypropylene groups and polyoxyethylene groups with the proviso that the weight ratio of the polyoxypropylene groups : the poly oxyethylene groups is 90 : 10, and $(PO)_n$ is a polyoxypropylene group.

[Example 20] A refrigerator oil comprising a carbonic acid ester having an average molecular weight of 2000 represented by the following formula:

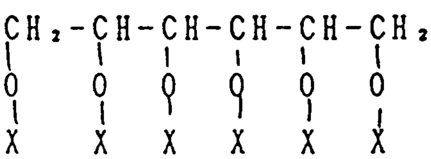

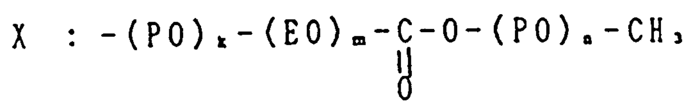

wherein $(PO)_k$-$(EO)_m$ is a random copolymer of polyoxypropylene groups and polyoxyethylene groups with the proviso that the weight ratio of the polyoxypropylene groups : the poly oxyethylene groups is 90 : 10, and $(PO)_n$ is a polyoxypropylene group.

[Example 21] A refrigerator oil comprising a carbonic acid ester having an average molecular weight of 2000 represented by the following formula:

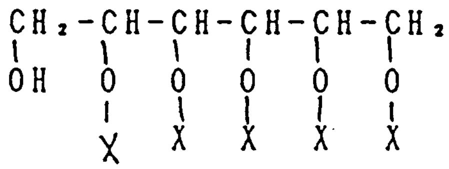

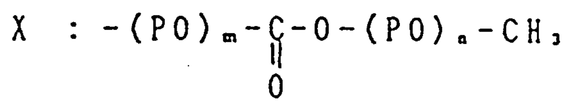

wherein $(PO)_m$ and $(PO)_n$ are each a polyoxypropylene group.

[Example 22] A refrigerator oil comprising a carbonic acid ester having an average molecular weight of 1000 represented by the following formula:

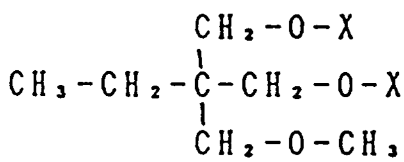

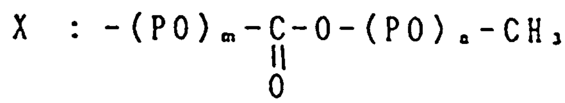

wherein $(PO)_m$ and $(PO)_n$ are each a polyoxypropylene group.

[Example 23] A refrigerator oil comprising a carbonic acid ester having an average molecular weight of 2000 represented by the following formula:

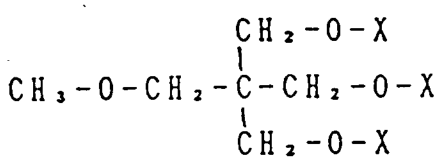

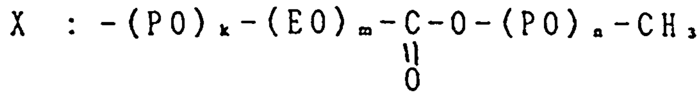

wherein $(PO)_k$-$(EO)_m$ is a random copolymer of polyoxypropylene groups and polyoxyethylene groups with the proviso that the weight ratio of the polyoxypropylene groups : the poly oxyethylene groups is 90 : 10, and $(PO)_n$ is a polyoxypropylene group.

[Example 24] A refrigerator oil comprising a carbonic acid ester having an average molecular weight of 2200 represented by the following formula:

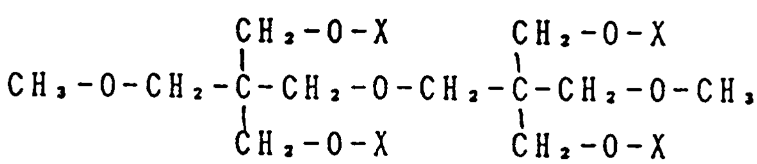

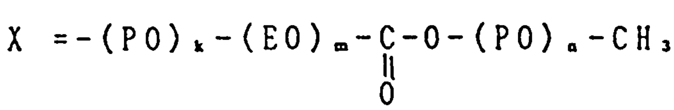

wherein $(PO)_k$-$(EO)_m$ is a random copolymer of polyoxypropylene groups and polyoxyethylene groups with the proviso that the weight ratio of the polyoxypropylene groups : the poly oxyethylene groups is 50 : 50, and $(PO)_n$ is a polyoxypropylene group.

[Example 25] A refrigerator oil comprising a carbonic acid ester having an average molecular weight of

2400 represented by the following formula:

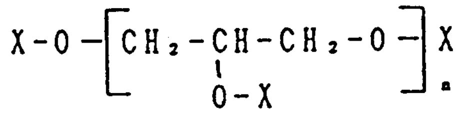

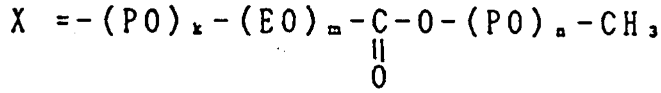

wherein $(PO)_k$-$(EO)_m$ is a random copolymer of polyoxypropylene groups and polyoxyethylene groups with the proviso that the weight ratio of the polyoxypropylene groups : the poly oxyethylene groups is 80 : 20, and $(PO)_n$ is a polyoxypropylene group.

[Comparative Example 1] A naphthenic mineral oil

[Comparative Example 2] A branched-chain type alkylbenzene (average molecular weight: about 480)

[Comparative Example 3] A tetraester of pentaerythritol, 2-methyl-hexanoic acid and 2-ethyl-hexanoic acid

[Comparative Example 4] Polyoxypropylene glycol (average molecular weight: about 1000)

[Comparative Example 5] Polyoxypropylene glycol monobutyl ether (average molecular weight: about 2000)

[Comparative Example 6] Polyoxypropylene oxyethylene glycol dimethyl ether (average molecular weight: about 2000)

The base oils of Examples 1-25 for the lubricating oils of the present invention were evaluated for their performances that were their miscibility with HFC-134a, hydrolysis resistance, and wear resistance by the following respective test methods. For comparison, the mineral oil, the alkylbenzene, the ester oils and the polyoxyalkylene glycol of the Comparative Examples 1-6 which have heretofore been used as lubricating oils were evaluated in the same manner as in Examples 1-25.

(Miscibility with HFC-134a)

0.2g of the test oil of each of the Examples and the Comparative Examples and 2.0g of the refrigerant (HFC-134a) were sealed in a glass tube having an inner diameter of 6 mm and a length of 220mm. The glass tubes so sealed were placed in a thermostat maintained at a predetermined low temperature and then in a thermostat kept at a predetermined high temperature to observe whether the refrigerant and the test oil were miscible with each other, separated from each other or made white-turbid.

(Hydrolysis test)

Sixty grams (60g) of each of the test oils and 0.6g of water were introduced in a 200-ml glass test tube and copper, iron and aluminum plates ($6cm^2$) were then placed therein as deterioration accelerating catalysts, after which the whole in the tube was heated to 175 °C for 168 hours in an autoclave made of stainless steel thereby to thermally deteriorate the test oils.

After the test, each of the test oils was measured for acid value and hydroxyl value.

(FALEX wear test)

The test oils were each applied to a test journal for measuring the amount of the test journal worn by having the journal run in at a test oil temperature of 100 °C under a load of 150 lb for 1 minute and then running it under a load of 250 lb for 2 hours in accordance with ASTM D 2670.

Table 1

| Example・Comparative Example | Kinematic viscosity at 100℃ (cSt) | Miscibility with HFC-134a Miscible temperature range (℃) | Hydrolysis resistance (mg KOH/g) | | Falex test Amount of journal worn (mg) |
|---|---|---|---|---|---|
| | | | Acid value | Hydroxyl value | |
| Example 1 | 23.2 | <-70 - 55 | 0.02 | 2.6 | 22 |
| Example 2 | 24.9 | <-70 - 53 | 0.03 | 2.2 | 19 |
| Example 3 | 21.5 | <-70 - 62 | 0.05 | 3.9 | 25 |
| Example 4 | 10.8 | <-70 - >80 | 0.03 | 1.5 | 22 |
| Example 5 | 10.2 | <-70 - >80 | - | *2.1 | 24 |
| Example 6 | 20.5 | <-70 - 60 | 0.05 | 2.4 | 25 |
| Example 7 | 19.8 | <-70 - 59 | 0.06 | 2.0 | 24 |
| Example 8 | 20.6 | <-70 - 62 | 0.05 | 3.5 | 27 |
| Example 9 | 30.1 | <-70 - 72 | - | *2.0 | 20 |
| Example 10 | 12.0 | <-70 - 81 | 0.06 | 2.5 | 22 |
| Example 11 | 23.2 | <-70 - 62 | 0.06 | 2.1 | 24 |
| Example 12 | 28.4 | <-70 - 68 | 0.04 | 3.9 | 28 |
| Example 13 | 29.5 | <-70 - 65 | 0.05 | *3.1 | 30 |
| Example 14 | 11.7 | <-70 - 83 | 0.04 | 3.4 | 24 |
| Example 15 | 22.6 | -65 - 71 | 0.06 | 2.5 | 21 |
| Example 16 | 31.5 | -35 - 65 | 0.15 | 4.5 | 19 |
| Example 17 | 30.2 | <-70 - 74 | 0.03 | 2.4 | 20 |

*: Difference between the hydroxyl values measured before thermal deterioration of the oil and measured after the deterioration thereof.

Table 1 (continued)

| Example · Comparative Example | Kinematic Viscosity at 100°C (cSt) | Miscibility with HFC-134a Miscible temperature range (°C) | Hydrolysis resistance (mg KOH/g) | | Falex test Amount of journal worn (mg) |
|---|---|---|---|---|---|
| | | | Acid value | Hydroxyl value | |
| Example 18 | 11.5 | < -70 - 75 | 0.04 | 2.8 | 23 |
| Example 19 | 27.1 | < -70 - 68 | 0.04 | 2.5 | 27 |
| Example 20 | 32.2 | < -70 - 71 | 0.05 | 3.8 | 30 |
| Example 21 | 28.4 | -68 - 66 | 0.03 | *3.3 | 30 |
| Example 22 | 10.9 | -70 - 80 | 0.06 | 3.1 | 24 |
| Example 23 | 28.1 | -65 - 70 | 0.06 | 2.0 | 25 |
| Example 24 | 35.2 | -35 - 63 | 0.13 | 3.9 | 20 |
| Example 25 | 32.9 | -65 - 70 | 0.03 | 2.5 | 20 |
| Comp. Ex. 1 | 21.5 | Immiscible | - | - | 20 |
| Comp. Ex. 2 | 22.0 | Immiscible | - | - | 22 |
| Comp. Ex. 3 | 5.2 | -45 - >80 | 9.5 | 11.3 | 16 |
| Comp. Ex. 4 | 23.4 | -45 - 32 | - | - | 25 |
| Comp. Ex. 5 | 37.9 | -52 - 19 | - | - | 25 |
| Comp. Ex. 6 | 24.8 | < -70 - 45 | - | - | 27 |

*: Difference between the hydroxyl values measured before thermal deterioration of the oil and measured after the deterioration thereof.

It is apparent from the results indicated in Table 1 that the lubricating oils (Examples 1-25) of the present invention are very excellent in miscibility with a refrigerant, HFC-134a, as compared with the conventional lubricating oils of Comparative Examples 1-2. Particularly, the carbonic acid ester oils of the present invention are excellent in miscibility with a refrigerant, HFC-134a, as compared with even the polyalkylene glycols of Comparative Examples 4-6 which have been known as lubricating oils having excellent miscibility with the HFC-134a refrigerant. Further, the FALEX wear test shows that the lubricating

oils of Examples 1-25 are at least equal in wear resistance to those of Comparative Examples 1-2 and 4-6.

Table 1 also shows that the ester oil of Comparative Example 3 is inferior in hydrolysis stability whereby it will raise some problems as to corrosion by acids formed when used in a refrigerator system in which external moisture is expected to enter into the system and mix with the oil, while the lubricating oils of Examples 1-25 will not raise any problems because of no formation of acids although they are somewhat hydrolyzable and form hydroxyl groups when used in such a refrigetator system as above.

(Effect of the Invention)

As is apparent from the above comparative experiments, the lubricating oils of the present invention are excellent in miscibility with refrigerants, hydrolysis resistance and wear resistance, and are suitable for use in refrigerators using therein a hydrogen-containing halogenocarbon as a refrigerant. They can therefore be preferably used particularly as a refrigerator oil.

## Claims

**1.** Use of a synthetic lubricating oil comprising

(A) as a base oil at least one kind of a carbonic acid ester selected from the group consisting of:

[I] a carbonic acid ester represented by the general formula (1)

$$X^1O\left[(A^1O)_a\overset{O}{\overset{\|}{C}}-O\right]_b X^2 \qquad (1)$$

wherein $X^1$ represents a member selected from the group consisting of a hydrogen atom, an alkyl group, a cycloalkyl group and a group having the general formula of

$$R^2O\overset{O}{\overset{\|}{C}}-,$$

$X^2$ represents a member selected from the group consisting of an alkyl group, a cycloalkyl group or a group having the general formula of $(A^4O)_g$-$R^3$, $A^1$ and $A^4$ may be identical with, or different from, each other and are each an alkylene group having 2 - 4 carbon atoms (with the proviso that the alkylene groups necessarily include an ethylene group or ethylene groups), $R^2$ represents an alkyl group or cycloalkyl group, $R_3$ represents a hydrogen atom, an alkyl group or an cycloalkyl group, a and g are each an integer of 1 - 50 and b is an integer of 1 - 10, and

[II] a carbonic acid ester represented by the general formula (2)

$$(X^3-O)_d B\left[O-(A^2O)_e\overset{O}{\overset{\|}{C}}O(A^3O)_f R^1\right]_c \qquad (2)$$

wherein $X^3$ represents a member selected from the group consisting of a hydrogen atom, an alkyl group, a cycloalkyl group or a group having the general formula of $R^4$-$(OA^5)_h$-, $A^2$, $A^3$ and $A^5$ may be identical with, or different from, each other and are each an alkylene group having 2 - 4 carbon atoms, $R^1$ and $R^4$ may be identical with, or different from, each other and are each a hydrogen atom, an alkyl group or a cycloalkyl group, B represents the residue of a compound having 3 - 20 hydroxyl groups, c is an integer of 1 - 20, d is an integer of 0 - 19, and the sum of c and d equals an integer of 3 - 20, e and f are each an integer of 0 - 50 with the proviso that e and f are not

zero at the same time, and h is an integer of 1 - 50, and

(B) at least one kind of an epoxy compound selected from the group consisting of phenylglycidyl ether type epoxy compounds, glycidyl ester type epoxy compounds, epoxidized fatty acid monoesters and epoxidized vegetable oils, in an amount of 0.1 - 5.0% by weight based on the total amount of the synthetic lubricating oil;

in refrigerators using therein a hydrogen-containing halogenocarbon and/or a hydrogen-free halogenocarbon as the refrigerant.

**2.** Use according to claim 1, wherein the base oil is a mixture of:

(i) at least one kind of a carbonic acid ester selected from the group consisting of the carbonic acid esters [I] - [II], and

(ii) at least one kind of an oil selected from the group consisting of (1) polyglycols which are polyoxyalkylene glycols, polyoxyalkylene glycol monoethers, polyoxyalkylene glycol diethers and polyoxyalkylene glycol glycerol ethers, and (2) complex esters of a monohydric alcohol, a dihydric alcohol, a monocarboxylic acid and a dicarboxylic acid, (3) esters of a neopentyl type polyol and a carboxylic acid, (4) complex esters of neopentyl type polyol, a monocarboxylic acid and a dicarboxylic acid, and (5) carbonic acid esters having a different structure from that of those of the present invention.

**3.** Use according to claim 2, wherein the at least one kind of carbonic acid ester (i) is comprised in an amount of not more than 80% by weight based on the total amount of the synthetic lubricating oil.

**4.** Use according to claim 1, wherein the synthetic lubricating oil further comprises at least one kind of a phosphorus compound selected from the group consisting of phosphoric esters, acid phosphoric esters, amine salts of acid phosphoric esters, chlorinated phosphoric esters and phosphorous esters, in an amount of 0.1 - 5.0% by weight based on the total amount of the synthetic lubricating oil.

**5.** Use according to claim 1, wherein the synthetic lubricating oil further comprises a carboxylic acid represented by the general formula

$R^5$-CH(COOH)$_2$

and/or the general formula

$R^6$-CH$_2$COOH

wherein $R^5$ and $R^6$ may be identical with, or different from, each other and are each an alkyl group having 8 - 18 carbon atoms, in an amount of 0.01 - 3% by weight based on the total amount of the synthetic lubricating oil.

**6.** Use according to claim 1, wherein the synthetic lubricating oil further comprises at least one kind of monohydric alcohols, dihydric alcohols and partially esterified polyhydric alcohols having 7 - 18 carbon atoms, in an amount of 0.01 - 3% by weight based on the total amount of the synthetic lubricating oil.

## Patentansprüche

**1.** Verwendung eines synthetischen Schmieröls mit Gehalt an (A) mindestens einer Art eines Carbonsäureesters als Basisöl nämlich:

(I) einem Carbonsäureester der allgemeinen Formel (1),

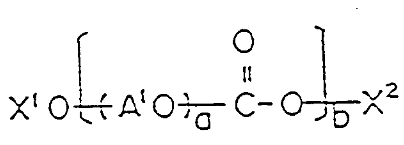

(1)

in der $X^1$ für ein Wasserstoffatom, eine Alkylgruppe, eine Cycloalkylgruppe und eine Gruppe der

allgemeinen Formel

$$R^2O\overset{O}{\overset{\|}{C}}-,$$

steht, wobei $X^2$ eine Alkylgruppe, eine Cycloalkylgruppe oder eine Gruppe der allgemeinen Formel $(A^4O)_g$ $R^3$ ist, wobei $A^1$ und $A^4$ miteinander identisch oder verschieden voneinander sein können, nämlich eine Alkylengruppe mit 2 - 4 Kohlenstoffatomen (mit der Bedingung, daß die Alkylengruppen notwendigerweise eine Ethylengruppe oder Ethylengruppen umfassen), $R^2$ für eine Alkylgruppe oder eine Cycloalkylgruppe, $R_3$ für ein Wasserstoffatom, eine Alkylgruppe oder eine Cycloalkylgruppe, wobei a und g jeweils eine ganze Zahl von 1 - 50 und b eine ganze Zahl von 1 - 10 sind, stehen und

(II) einem Carbonsäureester der allgemeinen Formel (2)

$$(X^3-O)_d\, B\left[O-(A^2O)_e-\overset{O}{\overset{\|}{C}}O-(A^3O)_f-R^1\right]_c \qquad (2)$$

wobei $X^3$ für ein Wasserstoffatom, eine Alkylgruppe oder eine Cycloalkylgruppe oder eine Gruppe der allgemeinen Formel $R^4$-$(OA^5)_h$- stehen, wobei $A^2$, $A^3$ und $A^5$ gleich oder verschieden voneinander sein können, nämlich eine Alkylengruppe mit 2 - 4 Kohlenstoffatomen, wobei $R^1$ und $R^4$ gleich oder verschieden voneinander sein können, nämlich ein Wasserstoffatom, eine Alkylgruppe oder eine Cycloalkylgruppe, wobei B für den Rest einer Verbindung steht, die 3 - 20 Hydroxylgruppen aufweist, wobei c eine ganze Zahl von 1 - 20, d eine ganze Zahl von 0 - 19 und die Summe von c und d gleich einer ganzen Zahl von 3 - 20 ist, e und f jeweils eine ganze Zahl von 0 - 50 mit der Bedingung sind, daß e und f nicht gleichzeitig 0 sind, wobei h eine ganze Zahl von 1 - 50 ist und,

(B) mindestens eine Art einer Epoxyverbindung nämlich Epoxyverbindungen vom Phenylglycidyläthertyp, Epoxyverbindungen vom Glycidylestertyp, epoxydierte Fettsäuremonoester und epoxydierte Pflanzenöle, in Mengen von 0,1 bis 5,0 Gewichtsprozent, bezogen auf das Gesamtgewicht des synthetischen Schmieröls;

in Kühlschränken, unter Verwendung eines wasserstoffhaltigen Halogenkohlenstoffs und/oder eines wasserstofffreien Halogenkohlenstoffs als Kühlmittel.

**2.** Verwendung nach Anspruch 1, wobei das Basisöl eine Mischung ist aus:
(i) mindestens einer Art eines Carbonsäureesters nämlich der Carbonsäureester [I] - [II] und
(ii) mindestens eine Art eines Öls nämlich (1) Polyglykole, nämlich Polyoxyalkylenglykole, Polyoxyalkylenglykolmonoäther, Polyoxyalkylenglykoldieäther und Polyoxyalkylenglykolglyceroläther und (2) komplexe Ester eines monohydrischen Alkohols, eines dihydrischen Alkohols, einer Monocarbonsäure und einer Dicarbonsäure (3) Ester eines Polyols vom Neopentyltyp und einer Carbonsäure, (4) komplexe Ester eines Polyols vom Neopentyltyp, einer Monocarbonsäure und einer Dicarbonsäure, und (5) Carbonsäureester mit von denen der vorliegenden Erfindung verschiedenen Struktur.

**3.** Verwendung nach Anspruch 2, wobei mindestens eine Art Carbonsäureester (1) in Mengen von nicht mehr als 80 Gewichtsprozent, bezogen auf die Gesamtmenge des synthetischen Schmieröls, enthalten ist.

**4.** Verwendung nach Anspruch 1, wobei das synthetische Schmieröl darüber hinaus mindestens eine Art einer Phosphorverbindung, nämlich Phosphorigester, saure Phosphorigester, Aminsalze von sauren Phosphorigestern, chlorierte Phosphorigester und Phosphorestern in Mengen von 0,1 bis 5,0 Gewichtsprozent, bezogen auf die Gesamtmenge des synthetischen Schmieröls enthält.

**5.** Verwendung nach Anspruch 1, wobei das synthetische Schmieröl darüber hinaus eine Carbonsäure der allgemeinen Formel

$R^5\text{-}CH(COOH)_2$

und/oder der allgemeinen Formel

$R^6\text{-}CH_2COOH$

enthält, wobei $R^5$ and $R^6$ gleich oder verschieden voneinander sein können, nämlich eine Alkylgruppe mit 8 - 18 Kohlenstoffatomen, in Mengen von 0,01 bis 3 Gewichtsprozent, bezogen auf die Gesamtmenge des synthetischen Schmieröls.

6. Verwendung nach Anspruch 1, wobei das synthetische Schmieröl darüber hinaus mindestens eine Art von monohydrischen Alkoholen, dihydrischen Alkoholen und partiell veresterten polyhydrischen Alkoholen mit 7 - 18 Kohlenstoffatomen, in Mengen von 0,01 - 3 Gewichtsprozent, bezogen auf die Gesamtmenge an synthetischem Schmieröl, enthält.

## Revendications

1. Utilisation d'une huile lubrifiante synthétique comprenant
   (A) en tant qu'huile de base au moins un type d'un ester d'acide carbonique choisi dans le groupe formé par:
   [I] un ester d'acide carbonique représenté par la formule générale (1)

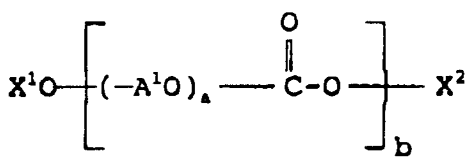

(1)

dans laquelle $X^1$ représente un élément choisi dans le groupe formé par un atome d'hydrogène, un groupe alkyle, un groupe cycloalkyle et un groupe ayant la formule générale

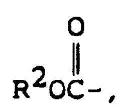

$X^2$ représente un élément choisi dans le groupe formé par un groupe alkyle, un groupe cycloalkyle ou un groupe ayant la formule générale de $-(\text{-}A^4O)_g-R^3$, $A^1$ et $A^4$ peuvent être identiques ou différents l'un de l'autre et sont chacun un groupe alkylène ayant 2 à 4 atomes de carbone (à condition que les groupes alkylène incluent nécessairement un groupe éthylène ou des groupes éthylène), $R^2$ représente un groupe alkyle ou cycloalkyle, $R^3$ représente un atome d'hydrogène, un groupe alkyle ou cycloalkyle, a et g sont chacun un nombre entier de 1 à 50 et b est un nombre entier de 1 à 10, et
[II] un ester d'acide carbonique représenté par la formule générale (2)

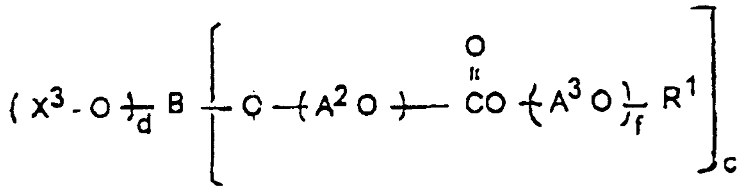

(2)

dans laquelle $X^3$ représente un élément choisi dans le groupe formé par un atome d'hydrogène, un groupe alkyle, un groupe cycloalkyle ou un groupe ayant la formule générale de $R^4\text{-}(OA^5)_h\text{-}$, $A^2$, $A^3$ et $A^5$ peuvent être identiques ou différents l'un de l'autre et représentent chacun un groupe

alkylène ayant 2 à 4 atomes de carbone, $R^1$ et $R^4$ peuvent être identiques ou différents l'un de l'autre, chacun représente un atome d'hydrogène, un groupe alkyle ou cycloalkyle, B représente le résidu d'un composé ayant 3 à 20 groupes hydroxyle, c est un nombre entier de 1 à 20, d est un nombre entier de 0 à 19, et la somme de c et d vaut un nombre entier de 3 à 20, e et f représentent chacun un nombre entier de 0 à 50, à condition que e et f ne vaillent pas zéro en même temps, et h est un nombre entier de 1 à 50, et

(B) au moins un type d'un composé époxy choisi dans le groupe formé par les composés époxy de type éther de phénylglycidyle, les composés époxy de type ester de glycidyle, les monoesters d'acide gras époxydés et les huiles végétales époxydées, à raison de 0,1 à 5,0% en poids par rapport à la quantité totale de l'huile lubrifiante synthétique;

dans des réfrigérateurs utilisant dans l'invention un halogénocarbure çontenant de l'hydrogène et/ou un halogénocarbure exempt d'hydrogène en tant que fluide réfrigérant.

2. Utilisation selon la revendication 1, dans laquelle l'huile de base est un mélange de:

(i) au moins un type d'un ester d'acide carbonique choisi dans le groupe formé par les esters d'acide carbonique [I] et [II], et

(ii) au moins un type d'une huile choisie dans le groupe formé (1) des polyglycols qui sont les polyoxyalkylèneglycols, les polyoxyalkylèneglycolmonoéthers, les polyoxyalkylèneglycol-diéthers et les polyoxyalkylène-glycol-glycérol-éthers, et (2) des esters complexes d'un monoalcool, d'un dialcool, d'un acide monocarboxylique et d'un acide dicarboxylique, (3) des esters d'un polyol de type néopentyle et d'un acide carboxylique, (4) des esters complexes de polyol de type néopentyle, d'un acide monocarboxylique et d'un acide dicarboxylique, et (5) des esters d'acide carbonique ayant une structure différente de celle de ceux de la présente invention.

3. Utilisation selon la revendication 2, dans laquelle au moins un type d'ester d'acide carboxylique (i) est inclus à raison de pas plus de 80% en poids par rapport à la quantité totale de l'huile lubrifiante synthétique.

4. Utilisation selon la revendication 1, dans laquelle l'huile lubrifiante synthétique comprend de plus au moins un type d'un composé phosphoré choisi dans le groupe formé des esters phosphoriques, des esters phosphoriques acides, des sels aminés d'esters phosphoriques acides, des esters phosphoriques chlorés et des esters phosphoreux, à raison de 0,1 à 5,0% en poids par rapport à la quantité totale de l'huile lubrifiante synthétique.

5. Utilisation selon la revendication 1, dans laquelle l'huile lubrifiante synthétique comprend de plus un acide carboxylique représenté par la formule générale

$R^5$-CH(COOH)$_2$

et/ou la formule générale

$R^6$-CH$_2$COOH

dans laquelle $R^5$ et $R^6$ peuvent être identiques ou différents l'un de l'autre et représentent chacun un groupe alkyle ayant 8 à 18 atomes de carbone, à raison de 0,01 à 3% en poids par rapport à la quantité totale de l'huile lubrifiante synthétique.

6. Utilisation selon la revendication 1, dans laquelle l'huile lubrifiante synthétique comprend au moins un type de monoalcools, de dialcools et de polyalcools partiellement estérifiés ayant 7 à 18 atomes de carbone, à raison de 0,01 à 3% en poids par rapport à la quantité totale de l'huile lubrifiante synthétique.